# EUROPEAN PATENT APPLICATION

(11) **EP 1 491 881 A1**
(43) Date of publication of application: **29.12.2004**
(21) Application number: 04474002.5
(22) Date of filing: 23.06.2004
(51) Int. Cl.: G01N 25/18, G01N 25/00

(54) **Method and device for measuring thermophysical parameters of materials by pulse transient method**

(30) Priority: 23.06.2003 SI 200300804
(71) Applicant: Kubicar, Ludovit, 841 01 Bratislava (SK); Bohac, Vlastimil, 851 01 Bratislava (SK); Markovic, Marian, 841 01 Bratislava (SK); Vretenar, Viliam, 052 01 Spisska Nova Ves (SK); Hrkut, Pavol, 821 07 Bratislava (SK)
(72) Inventor: Kubicar, Ludovit, 841 01 Bratislava (SK); Bohac, Vlastimil, 851 01 Bratislava (SK); Markovic, Marian, 841 01 Bratislava (SK); Vretenar, Viliam, 052 01 Spisska Nova Ves (SK); Hrkut, Pavol, 821 07 Bratislava (SK)
(74) Representative: Brichtova, Tatiana

(57) **Abstract**

The method is based on the following: data of the thermal diffusivity, thermal conductivity and the specific heat are calculated from the temperature response to the heat pulse represented by data set (Tᵢ, tᵢ) obtained by a single measurement providing the estimation while the optimization procedures are utilized; energy (10⁻⁴ up to 10⁻⁵ Wm⁻²) and width of the heat pulse (0.1 up to 1200 sec) being experimental parameters and temperature response ranges from 0.1 K up to 5 K. Specimen cross-section, specimen thickness and specimen density are input parameters for estimation and optimization procedures.

The essential part of the device is the measuring chamber (12) which contains a single one or two heat exchangers (1) thermally isolated from the base plate (2) by the heat bridge (3) considering that the isothermal shield (4) is thermally anchored to the heat exchanger (1) and the vacuum container (5) adjoins to the base plate (2); the thermosensor is placed in specimen set in one part of its space and the heat source (7) in the other part of its space while both are above the heat exchanger (1), when a single heat exchanger configuration is used, below the isothermal shield and/or the vacuum container (5), or between two heat exchangers (1), when two heat exchangers configuration is used, again below the isothermal shield and/or the vacuum container (5).

## Description

Invention deals with the method of the measuring the thermophysical parameters of materials by pulse transient method, with the construction of the measuring device and the measuring chamber for measuring specific heat, thermal conductivity and thermal diffusivity. All three thermophysical parameters can be determined within a single measurement using the mentioned device. The invention belongs to the field of measurement technique.

### Present state of the art

Thermophysical parameters such as specific heat, thermal diffusivity and thermal conductivity are of the highest importance for optimal application of materials in engineering, technology or civil engineering. On the contrary to pulse transient method, any thermophysical parameter is determined by a particular measurement method using a specific device. For example, there are devices for measuring the thermal conductivity based on the steady state measuring technique where measurements are realized in air atmosphere using isothermal measuring regime. Specimen size ranges from several cm³ up to thousands of cm³. Devices based on flash method are used for measurements of the thermal diffusivity using any surrounding atmosphere and isothermal as well as non-isothermal measuring regime. Specimen size, for that case, has shape of cylinder up to 10 mm in diameter and 5 mm in length. Specific heat of materials can be measured e.g. by adiabatic calorimetry in vacuum using specimen volume of several cm³. All above-mentioned measuring devices have specimen size limitation where small specimens made of in-homogenous materials strongly influence the measured data. Three thermophysical parameters can be measured by Gustafsson Probe, namely the thermal conductivity, thermal diffusivity and the specific heat. There is no specimen size limitation using the method. It is applicable at various temperatures and the air atmosphere. An device of a Swedish company Hot Disc AB is the only product applying the above-mentioned probe. However it doesn't use a chamber. Dynamic of the measurement can be influenced by free surrounding atmosphere. When measurements are realized without the chamber, measured data accuracy is influenced by deformation of the temperature field.

Drawbacks of the known methods for measuring the thermophysical parameters of materials as well as the corresponding devices specify requirements on measuring technique that uses non-disturbed dynamic of the temperature field and a single device determining all three thermophysical parameters within a single measurement. Such technique significantly improves data accuracy and data reliability. This effort yields to description of the method of measurement and the specific component of the new device. A chamber of the device for measuring thermophysical parameters of materials and a method to realize the measurement by pulse transient method is the subject of this invention.

### Ratio of the invention

The new method of measuring thermophysical parameters of materials by pulse transient method using the corresponding device with the chamber eliminates the above-mentioned drawbacks. The origin of the new measuring method is based on the following: data of the thermal diffusivity, thermal conductivity and the specific heat are calculated from the temperature response to the heat pulse represented by data set (Tᵢ, tᵢ) obtained by a single measurement providing the estimation while the optimization procedures are utilized. Procedures work with experimental parameters, namely energy (10⁻⁴ up to 10⁻⁵ Wm⁻²) and width of the heat pulse (0.1 up to 1200 sec). Specimen cross-section, specimen thickness and specimen density are input parameters for estimation and optimization procedures. Then temperature response ranges from 0.1 K up to 5 K and tₘ value corresponding to maximum temperature response Tₘ is determined by fitting a polynomial function over the temperature response during experimental parameters optimization.

An deviceal configuration or the device for measuring thermal diffusivity, specific heat and thermal conductivity is designed. The device consists of a chamber connected with a thermostat by a cooling loop and with a vacuum pump by a pneumatic loop. Plane heat source by first wire set and the thermosensor by second wire set are connected to the current source and to the voltmeter, respectively.

The principle of the measuring chamber is based on heat exchangers. While there is a single heat exchanger for one chamber type, there are two heat exchangers used for the other one. Heat-bridge thermally isolates the heat exchangers from the base plate. The heat-bridge and a valve block are fixed on the base plate. The valve block operates together with vacuum pump. Feedthroughs for inflow and outflow of the cooling medium and for electrical connecting wires are fixed on the base plate. The first electric wire set connects heat source with the current source and the second electric wire set connects the thermosensor with the voltmeter. An isothermal shield anchored to a heat exchanger is a part of the measuring chamber. The isothermal shield has a form of a container made of aluminium or copper material. Vacuum container that is fitted to base plate using vacuum O-ring covers the isothermal shield. A thermal isolation, e.g. polyurethane foam covers the vacuum container on the outer surface in a favourable case. An essential part of the chamber is a specimen setup consisting of a thermosensor fixed at one place and a heat source at the other place of the specimen. The specimen setup is fixed on the heat exchanger or clamped between two heat exchangers covered by the isothermal shield and/or the vacuum container.

The significant feature of the measuring chamber design of the device for measuring specific heat, thermal diffusivity and thermal conductivity by pulse transient method according to presented invention is the first realization of the construction of a component named heat exchanger. A part of the heat exchanger named heat exchanger body incorporates grooves connected to each other in a suitable manner with the inflow of the cooling medium in the centre and the outflow. Both inflow and outflow tubes are soldered using vacuum procedure. A plate is soldered over the heat exchanger body that covers protrusions between individual groves, too, using, again, the vacuum procedure.

The principle feature of the second realization of the pair of heat exchangers is based on grooves in a form of meander with inflow and outflow of the cooling medium. Both realizations of the heat exchangers are significant in construction of both, the first part - heat exchanger body and the second part - a covering plate. Both are made of brass or copper. A homogenization plate made of copper is soldered to the first part of the heat exchanger when the body is made of brass. A Kapton foil is glued to the surface of the heat exchanger or homogenization plate to ensure the electrical isolation.

The significant construction feature of the measuring chamber of the device for measuring specific heat, thermal diffusivity and thermal conductivity by pulse transient method is for the first realization, according to the presented invention, the construction of a component known as heat source. The heat source is a meander made of nickel foil with thickness in the range from 10 to 20 µm covered from both sides in Kapton foil where neighbour strips are separated by space from 10 to 20 µm thick. The electrical resistance has to be in the range from 1 to 10 Ω. Connecting strips are constructed in a way to suppress the supplementary heat. This is achieved by a choice of the width of a connecting strip to be doubled in comparison to the active one. In addition the connecting strip overlaps the meander in the length from 1 to 3 mm from its outer side.

Advantages of the method of measuring thermophysical parameters of materials and, in final upshot, the designed device, especially the measuring chamber, are evident in consequences that can be found outwards. The most significant advantage of the complex device for measuring specific heat, thermal diffusivity and thermal conductivity by pulse transient method in measuring chamber is determination of all three thermophysical parameters by calculation using a single temperature reaction and the input experimental parameters such as energy of the heat pulse, specimen dimension - cross-section and thickness and specimen density.

The second advantage of the device is its low price and simple operation. Its third advantage is working temperature range from -40°C up to 200 °C with resolution 0.1 K and the range of thermal conductivities from 0.015 up to 200 W m⁻¹ K⁻¹. Special construction of the measuring chamber provides undisturbed temperature field in the specimen that guarantees reliable data. Isothermal measuring regime i.e. realization of the measurements at constant temperatures allows inspection of the property changes caused by microstructural processes (material ageing, chemical reaction structural changes, low kinetic, etc.). Use of non-isothermal measuring regime, i.e. realization of the measurements during specimen heating or cooling, allows investigating the structural changes, slow reaction kinetic, etc. in the regime of the thermophysical analysis. Specimen size can be chosen in a way to suppress the specimen surface effects (heat loss to surroundings) and the contact effects (deformation of the temperature filed by the structure of the heat source) in a broad range depending on the extent of inhomogenity. Implementation of the measuring chamber into the device complex allows choosing environmental atmosphere and, in addition, various degree of fluid saturation for porous materials. A full programmable mode of the measurements, consisting of a combination of isothermal and non-isothermal measuring regime, can be used.

### Drawings overview

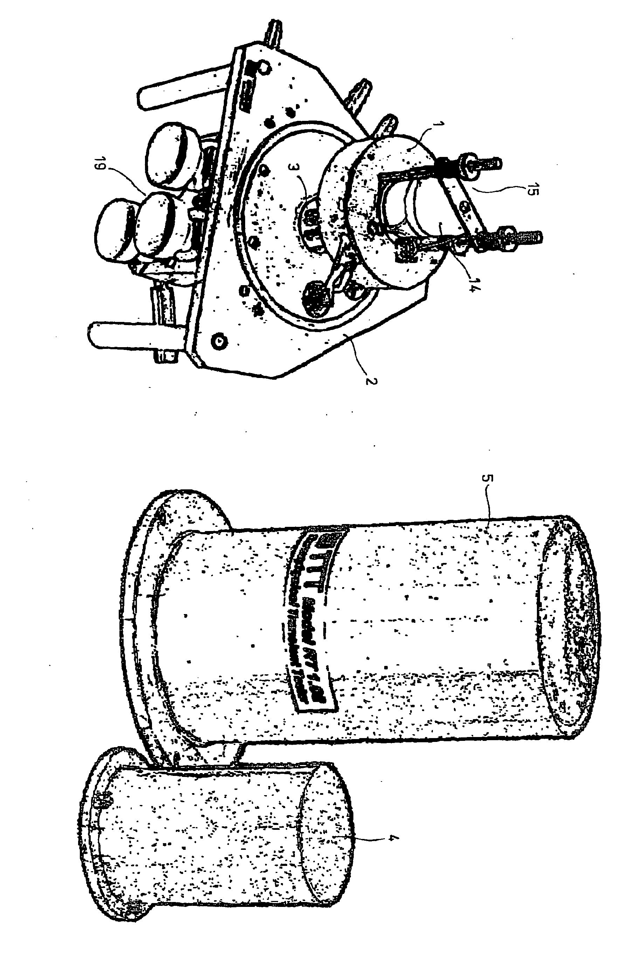

The measurement device including the chamber for measuring specific heat, thermal diffusivity and thermal conductivity by pulse transient method according to the presented invention will be shown in specific figures and more detail in particular drawings. Fig. 1 shows the principle of the pulse transient method using the plane heat source. Fig. 2 displays the first variant of the device realization with the chamber using a single heat exchanger. Fig. 3 illustrates the second variant of the device realization with the chamber where two heat exchangers are used. In Fig. 4 there is the vacuum system of the measuring chamber. Fig. 5 shows construction of the measuring chamber using a single heat exchanger and Fig. 6 the chamber using two heat exchangers. Fig. 7 displays the cut of the measuring chamber with the single heat exchanger and finally Fig. 8 shows the construction of the plane heat source.

### Examples of the realization of the invention

Naturally, particular realizations of the invention are demonstrated for illustration only and they don't represent limitation of any technical solution. Experts familiar with the stage of the art could find or might be able to locate many equivalents of the technical realizations of the specific invention parts when one reads description of the particular realizations using routine experimentation. Such equivalents will be presented in the range of the following invention claim.

For experts, familiar with the stage of the art, it cannot be a problem to design particular invention realizations and choice of the suitable materials and construction arrangements. Therefore those features have not been handled in detail.

### Example 1

A measuring algorithm is critical to obtain the required thermophysical parameters of materials especially in estimation and optimization procedures. The device is designed for broad range of thermal conductivities and heat capacities. This requires a broad range of experimental parameters, i.e. heat pulse energy ranging from 10⁴ up to 10⁵ W m⁻² and heat pulse width from 0.1 up to 1200 sec. The temperature response has to fulfil a criterion of a small disturbance so that, in real experiment, it represents good ratio of the signal to the temperature drift but, on the other hand, nonlinear effects must be suppressed. The temperature response has to be within the range from 0.1 up to 5 K. The control program allows a comfortable setting of the required experimental parameters. Two procedures are compiled to make user friendly set the required experimental parameters namely an estimation procedure and an optimization procedure. The specimen cross-section, specimen length and density are the input parameters for both procedures. The output of the above-mentioned procedures is a full set of experimental parameters that provides reliable data. The estimation procedure is based on correlation between the characteristics of the heat pulse (energy and the width) and the specimen density. The application of the estimated experimental parameters in optimization procedure, which is in fact based on the measurement, offers optimal experimental parameters to obtain reliable data. Even the estimated experimental parameters are sometimes far from optimal, thus the optimization procedure corrects them during the measurement.

Estimation of the maximum temperature response belongs to a complicated procedure for non-stabile signals. The shape of the temperature response strongly correlates with the microstructural changes of tested material. The correct determination of the thermophysical parameters depends on the estimation of the maximum temperature response. The following methodology of the signal evaluation is used: A data set Tᵢ, tᵢ is the result of a measurement. It represents a function Tᵢ = f(tᵢ). The data set is ordered according to value of Tᵢ where the largest value Tᵢ might correspond to the maximum tₘ. However the determination of the maximum tₘ is not accurate because of data scattering caused by microscopical processes. Application of standard statistical methods for ordered pairs of data set Tᵢ, tᵢ can give estimated maximum tₘ considering a certain number of data pairs Tᵢ, tᵢ from neighbourhood of Tᵢ highest values. The accuracy of tₘ estimation depends on the scanning rate and the number of data pairs Tᵢ, tᵢ included in calculation. The Tₘ is estimated by fitting the polynomial function of 2nd degree Tᵢ = f(tᵢ) within the data set Tᵢ, tᵢ involved in calculation for tₘ.

### Example 2

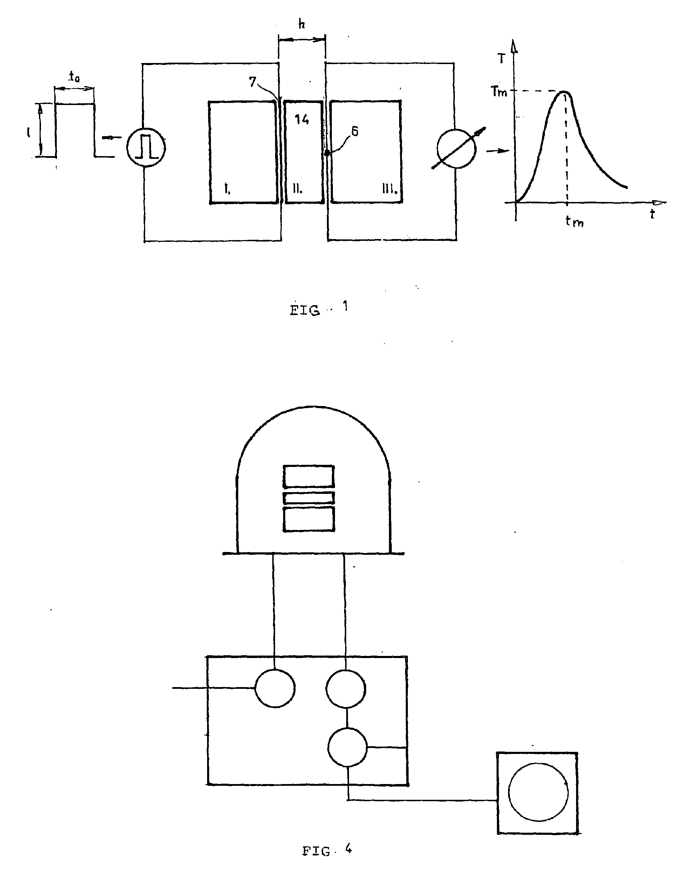

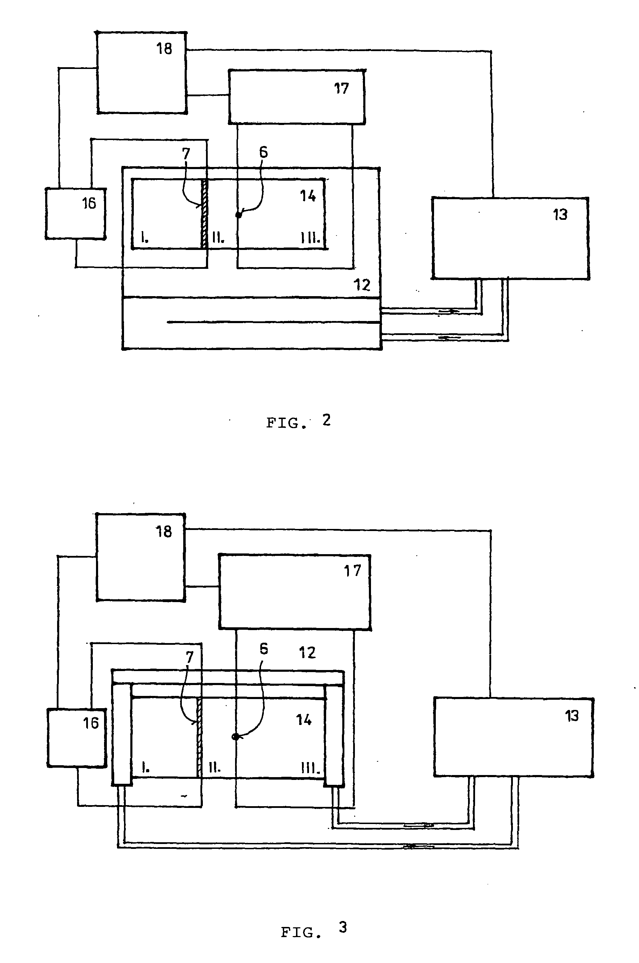

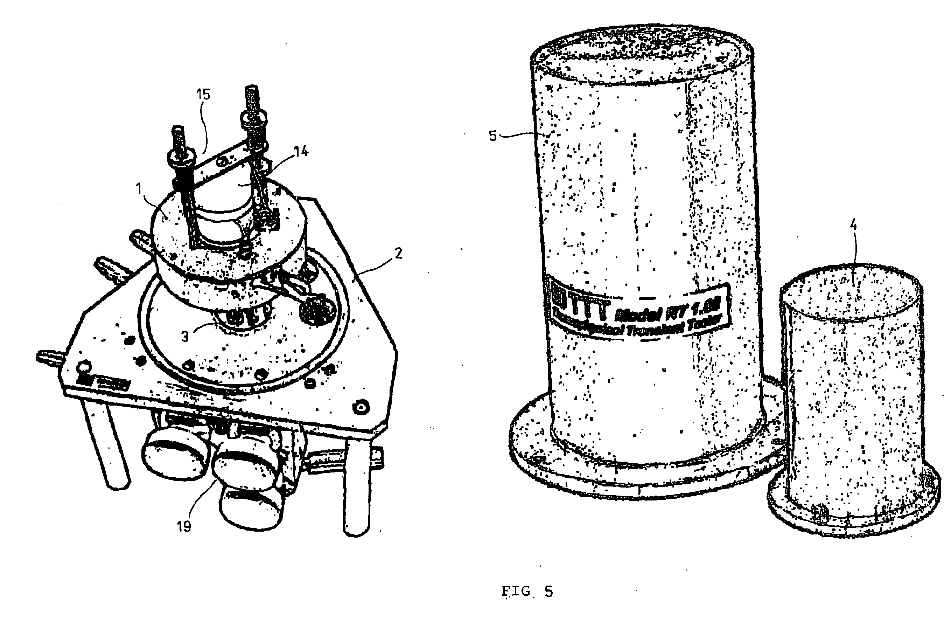

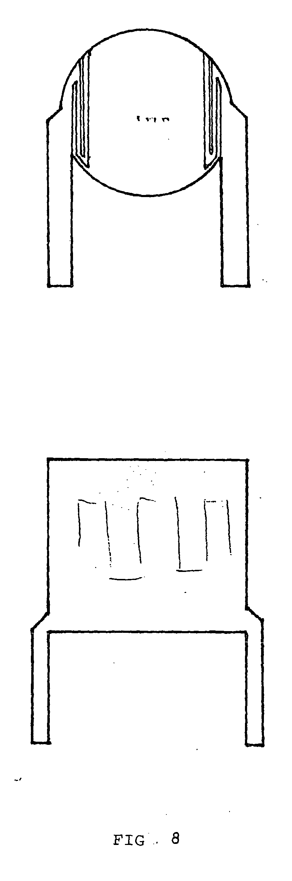

One of the construction types of the device for measuring specific heat, thermal diffusivity and thermal conductivity by pulse transient method is described in this example. The device consists of a measuring chamber (12) connected with a thermostat (13) by inflow and outflow of the cooling loop through a base plate (2) using feedthroughs and with a vacuum pump (not shown here) by the first pneumatic loop and with a gas container (not shown here) by the second pneumatic loop through the base plate (2). The vacuum system of the measuring chamber (12) is shown in Fig. 4. The first set of the electric wires connecting the plane heat source (7) to the current source (16) and the second set of the electric wires connecting the thermosensor (6) with the voltmeter (17) are introduced into the chamber through the base plate (2) using the feedthroughs. Signal stability is guaranteed by the feedthroughs as all connecting wires are led through tightly to keep vacuum conditions. There are microconnectors at the end of connecting wires in the chamber where joint contacts wire - pins are inserted into the heat exchanger body (1) or into the base plate (2) of the measuring chamber (12) at higher temperatures. Any joint contact metal - metal for low-level signals is critical considering a generation of the possible thermopile. Therefore all joint contacts in the measuring chamber are concentrated into the microconnectors and thermally isolated by silicon cement and outside the chamber into the connector of the electronic unit. The whole complex of the individual devices shown in Fig. 2 is interconnected with computer. Fig. 5 displays the construction of the measuring chamber (12). The measuring chamber (12) consists of a single heat exchanger (1) that is thermally isolated from the base plate (2) by a thermal bridge (3). The base plate (2) is made of metallic plate supported by three cylindrical roods. The thermal bridge (3) is made of thin-walled stainless steel tube vacuum soldered to the base plate at the first end (2) and through the copper interconnection to the copper tubes at the second end. A cooling medium flows through the copper tubes into the heat exchanger (1). A vacuum valve (19) is fixed to the base plate (2) which is connected with the vacuum pump or gas container (both not shown here). When high vacuum has to be used the valve block (19) is placed outside the device. Heat exchanger (1) shown in Fig. 7 is connected to the nipples by the copper tubes through the thermal bridge. The thermal bridge prevents the heat transfer from the copper tubes to the base plate (2) and to the vacuum container (5). The heat exchanger consists of several parts. The first part - the heat exchanger body (1) contains interconnected concentric grooves (8) with inflow of the cooling. medium in the centre. The outflow of the cooling medium is performed at the outer concentric groove (8). The second part of the heat exchanger consists of copper tubes for inflow and outflow of the cooling medium that are vacuum soldered with a plate. The plate overlaps the first part of the heat exchanger (1) through soldered interconnection. The first part and the overlapping plate of the heat exchanger is made of brass or copper. When the body is made of brass a homogenization plate (10) is soldered to the first part of the heat exchanger. Kapton foil (11) for electric insulation is glued to the surface of the heat exchanger/homogenization plate (10). A miniature platinum thermosensor is put into the groove just below the homogenization plate to measure the temperature of the heat exchanger (1). Screw mechanism (15) is arranged on the upper side of the heat exchanger to press down the specimen set (14) through the load sensor. The load sensor guarantees the reproducibility of the pressing down the specimen set especially when the specimen set is made of soft materials as it is shown in Fig. 5. An isothermal shield (4) mostly in a form of a container is anchored to the heat exchanger (1). The temperature gradient along the specimen is suppressed by the isothermal shield made of aluminium or copper. Vacuum container (5) that is fitted to the base plate (2) is covered in thermal insulation i.e. polyurethane foam on the outer side. This arrangement guarantees the temperature stability and, in addition, the chamber is isolated from the environmental influence. The most important facility of the measuring chamber (12) is a thermosensor (6) placed in the specimen set in a space above the heat exchanger (1). In the most favorable realization the thermosensor (6) is placed between the second and the third part of the specimen set as shown in Fig. 1. A thermocouple or miniature thermistor or etc. represents the thernosensor (6) for measuring the temperature response. If the thermocouple made of e.g. Chromel - Alumel having a diameter from 50 to 100 µm and insulated by Teflon is used then its reference point is pressed down to the heat exchanger (1) by a socle. This arrangement enables to obtain the temperature distribution along the specimen (14). When a different type of thermosensors is used then measurements of the temperatures inside the specimen by the thermosensor (6) and in the heat exchanger by another thermosensor provide full information on temperature stabilization in the specimen (14). The heat exchanger temperature can be measured e.g. by miniature platinum thermosensor that is inserted in the opening of the heat exchanger (1). Both probes (the heat source and the thermosensor) are connected to the electric wires through microconnectors. Any joint connection wire - pin is thermally isolated by silicone cement. Another important facility of the measuring chamber (12) is the heat source (7) placed, again, in the specimen set in other place of the space above the heat exchanger (1). In the most favourable realization the heat source (7) is placed between the first and second part of the specimen set as shown, again, in Fig. 1. The specimen made of inspected material is placed under the thermal shield (4) and/or the vacuum container (5).
The heat source (7) is made of nickel foil of thickness from 10 up to 20 µm covered in Kapton foil from both sides. A meander is e.g. etched in the nickel foil by photolithographic technique in a way that the neighbour strips are separated by a space (empty line) 20 to 30 µm thick. The construction of the heat source for all transient techniques is based on the principle of the constant heat output production in the unit area. Electrical currents in the range from 0.2 up to 7.0 A should be used to obtain good dynamic of the heat generation. Then electrical resistance of the heat source should be ranging from 1 to 10 Ω. The above-specified characteristics of the meanders are valid for heat sources (7) with diameter from 6 to 50 mm or size 6x6 to 50x50 mm. Thus the width of the strips in the meander (distance between two empty lines) changes to obtain electrical resistance in the range from 1 to 10 Ω. To suppress the additional heat production on the connecting strips, its width is to be doubled in comparison to strips in the meander. In addition the connecting strip overlaps the meander in the length from 1 to 3 mm from its outer side.

Functionality of the device for measuring specific heat, thermal diffusivity and thermal conductivity by pulse transient method using a plane heat source is derived from its principle shown in Fig. 1. The specimen made of inspected material is cut into three parts. The plane heat source (7) that generates pulse of the heat by passing the electrical current pulse (16), is placed in the contact of the I. and the II. part of specimen. A thermosensor (6) placed in the contact of the II and the III part of the specimen measures corresponding temperature response. The temperature of the specimen set (14) is controlled from one of the sides through the heat exchanger (1). Then the thermophysical parameters can be calculated using the temperature response and the input experimental parameters such as heat pulse energy, specimen size and its density. Specimen (14) can be made of alloys, ceramics, glasses, polymers, composites, product of powder metallurgy, etc. Different atmospheres or inert gas can be employed during the measurement by the presented device when the measuring chamber is used. Vacuum up to 0.0001 Pa can be used during the measurement, too. Variable humidity of the environmental atmosphere and different loads to press down the specimen (14), if made of soft material, can be controlled during the experiment. Measurement can be realized in isothermal or non-isothermal measuring regime using programmable cooling or heating ranging from 0.02 up to 1 K/min. Materials in the range of thermal conductivity from 0.015 up to 20 W m⁻¹ K⁻¹ and in the temperature range from -40°C up to 200°C with resolution 0.1 K can be measured. A thermostat (13) controls the specimen temperature (14). Specimens prepared from materials to be inspected should have form of a cylinder in diameter from 6 to 30 mm and length (parts I+II+III) from 5 to 45 mm or a block having the cross-section from 6x6 up to 30x30 mm and the length (parts I+II+III) from 5 to 45 mm assuming that the characteristic size of the inhomogenity extent is in the range from 0 up to 2 mm. The size of the specimen shape depends on the inhomogeneity extent and the surface effects. The device allows choosing the specimen size (14) to suppress the above-mentioned effects during the measuring process and thus, for the case of inhomogeneous materials, the effective values of the thermophysical parameters can be obtained. The device covers a broad range of thermal conductivities and inhomogenity extents of materials to be inspected. The heat pulse is generated by electrical current pulse using the current source (16) and the temperature response is scanned by a voltmeter. A computer (18) realizes data reduction and synchronization of all units operation. A control program operates in manual regime that performs a single measurement, an advanced regime that performs measurements in cycles providing a file as the output and, finally, a professional regime that cooperate with a laboratory database. The professional regime allows performing measurements in various combinations of measuring cycles and experimental parameters. Database cooperates with the corresponding graphical outputs.

### Example 3

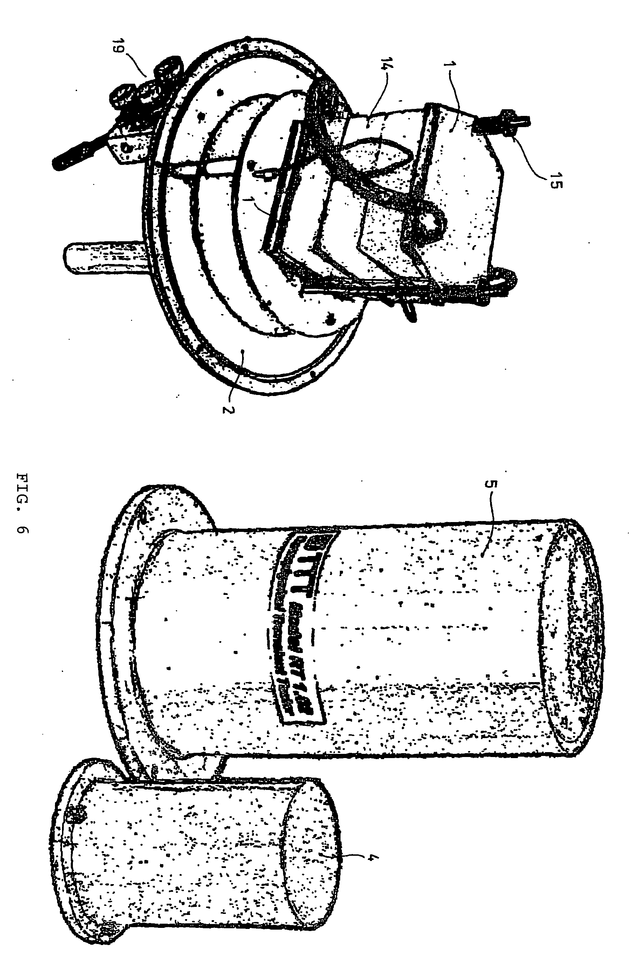

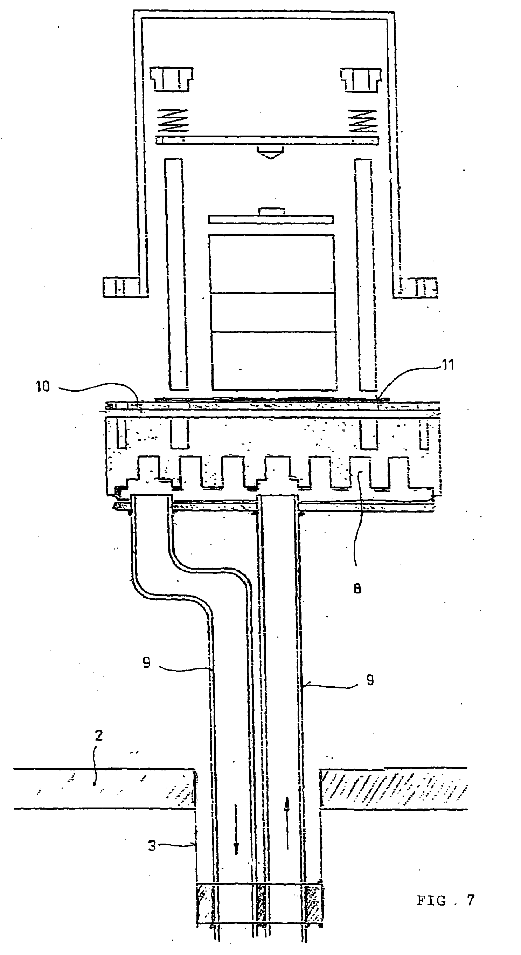

In this example another kind of the device construction for measuring specific heat, thermal diffusivity and thermal conductivity by pulse transient method is described. The device of similar features to those described in example 2 is described here. It differs from the previous one by the measuring chamber (12) using two heat exchangers shown in Figs. 3 and 6. This construction is suitable for large specimen sizes having large heat capacities. Therefore the specimen temperature is stabilized from two sides to suppress the temperature gradient along the specimen (14) made of material to be inspected. The heat exchanger (1) contains grooves in a form of meander with inflow and outflow of the cooling medium. This device can measure thermal insulations, wood, material for civil engineering, porous materials, layered structures and heterogeneous materials. Due to chamber, various atmosphere or inert can be used during the measurement. It is possible to use vacuum up to 0.0001 Pa. Variable humidity of the environmental atmosphere and different loads to press down the specimen (14), if made of soft material, can be controlled during the experiment. An isothermal measuring regime can be used. Materials in the range of thermal conductivity from 0.015 up to 20 W m⁻¹ K⁻¹ and in the temperature range from -40°C up to 200°C with resolution 0.1 K can be measured. Specimens prepared from materials to be inspected should have form of a block having the cross-section from 50x50 up to 150x150 mm and the length (parts I+II+III) from 10 to 140 mm assuming that the characteristic size of the inhomogenity extent is in the range from 0 up to 10 mm.

### Industrial application

The method of the measuring and the device for measuring specific heat, thermal diffusivity and thermal conductivity by pulse transient method can be used, according to the invention in the branch of material testing in general.

## Claims

1. The method of measuring thermophysical parameters by pulse transient method **where** the values of the specific heat, thermal diffusivity and thermal conductivity are calculated from the data set of pairs Tᵢ, tᵢ of the temperature response obtained within a single measurement after using the estimation and the optimization procedures that provide optimized experimental parameters, namely the heat pulse energy (10⁴ - 10⁵ W m⁻²) and the width of the heat pulse (0.1 - 1200 sec) and the corresponding temperature response in the range from 0.1 up to 5 K; the input parameters for estimation and optimization procedures are the specimen cross-section, specimen thickness and material density.

2. The method of measuring thermophysical parameters by pulse transient method according to claim 1 **where** the algorithm of the optimization procedure determines value tₘ and use of the fitting procedure provides Tₘ value.

3. The device for measuring specific heat, thermal diffusivity and thermal conductivity **characterized in that** the said device consists of the measuring chamber (12) connected by the cooling loop through the heat bridge (3) with the thermostat (13) and by the first pneumatic loop to the vacuum pump and, in addition, with the first set and the second set of the electrical wires leading into the chamber (12) to connect the heat source (7) with the current source (16) and the thermosensor (6) to the voltmeter (17), respectively.

4. The device for measuring specific heat, thermal diffusivity and thermal conductivity according to claim 3 **where** the current source (16), the thermostat (13), and the voltmeter (17) are interconnected with the computer (18).

5. The device for measuring specific heat, thermal diffusivity and thermal conductivity according to anyone of claims 3 and 4 **where** the measuring chamber contains a single one or two heat exchangers (1) thermally isolated from the base plate (2) by the heat bridge (3) considering that the isothermal shield (4) is thermally anchored to the heat exchanger (1) and the vacuum container (5) adjoins to the base plate (2); the thermosensor is placed in specimen set in one part of its space and the heat source (7) in the other part of its space while both are above the heat exchanger (1), when a single heat exchanger configuration is used, below the isothermal shield and/or the vacuum container (5), or between two heat exchangers (1), when two heat exchangers configuration is used, again below the isothermal shield and/or the vacuum container (5).

6. The device for measuring specific heat, thermal diffusivity and thermal conductivity according to anyone of claims 3 to 5 **where** the first part of the heat exchanger (1) of the measuring chamber (12) contains concentric grooves (8) connected to each other while the inflow of the cooling medium is situated in the centre and its outflow in the outer groove (8) and of the second part of the heat exchanger (1), consisting of the corresponding tubes (9), attached to the plate covering the first part of the heat exchanger (1).

7. The device for measuring specific heat, thermal diffusivity and thermal conductivity according to claim 5 **where** the heat exchanger (1) of the measuring chamber (12) contains groves (8) in form of a meander with inflow and outflow of the cooling medium.

8. The device for measuring specific heat, thermal diffusivity and thermal conductivity according to anyone of claims 5 to 7 **where** the first and the second part of the heat exchanger (1) are made of brass or copper.

9. The device for measuring specific heat, thermal diffusivity and thermal conductivity according to anyone of claims 5 to 7 **characterized in that** where the first part of the heat exchanger (1) is made of brass, a homogenization plate (10) made of copper is soldered to the first part of the heat exchanger (1).

10. The device for measuring specific heat, thermal diffusivity and thermal conductivity according to anyone of claims 5 to 7 **where** Kapton foil (11) is glued to the upper surface of the first part of the heat exchanger (1 ) to isolate electrically its first part while a thermosensor is placed into the groove under the foil.

11. The device for measuring specific heat, thermal diffusivity and thermal conductivity according to anyone of claims 5 to 7 **where** the isothermal shield (4) in the measuring chamber (12) is made of aluminum or copper.

12. The device for measuring specific heat, thermal diffusivity and thermal conductivity according to anyone of claims 5 to 7 **where** the vacuum container (5) of the measuring chamber (12) is covered in thermal insulator, e.g. polyurethane foam, from the outer side.

13. The device for measuring specific heat, thermal diffusivity and thermal conductivity according to anyone of claims 3 to 5 **where** the heat source (7) is a meander made of nickel foil in thickness from 10 to 20 µm having electrical resistance in the range from 1 to 10 Ω that is covered from both sides in Kapton foil with separated empty lines of thickness from 20 to 30 µm.
